# DEMANDE DE BREVET EUROPEEN

(11) **EP 3 620 292 A1**
(43) Date de publication de la demande: **11.03.2020**
(21) Numéro de dépôt: 18193142.9
(22) Date de dépôt: 07.09.2018
(51) Int. Cl.: B29C 65/02, B65B 51/26, B65B 57/02, G01B 7/06, B29C 65/10, B29C 65/14, B29C 65/20, B29C 65/36, B29C 65/50, B29C 65/48, B29C 65/78

(54) **PROCÉDÉ ET DISPOSITIF DE FABRICATION D'UNE SOUDURE D'EMBALLAGE**

(71) Demandeur: Aisapack Holding SA, 1896 Vouvry (CH)
(72) Inventeur: THOMASSET, Jacques, 74500 Neuvecelle (FR); GEX-COLLET, Yan, 1871 Choëx (CH); BUSSIEN, Gael, 1897 Le Bouveret (CH); FLEURET, François, 1400 Yverdon-les-Bains (CH); LEPOITTEVIN, Yann, 1005 Lausanne (CH); MONAY, Florent, 1870 Monthey (CH)
(74) Mandataire: Grosfillier, Philippe

(57) **Abrégé**

L'invention concerne un procédé et dispositif de soudage en continu d'une feuille en matière plastique pour la confection d'emballages flexibles, comme des tubes, comprenant au moins les étapes suivantes :
-) Mise en position de la feuille par rapport au dispositif de soudage
-) Mise en contact des extrémités de la feuille
-) Formation d'une zone soudée par chauffage, mise en pression et refroidissement desdites extrémités
-) Acquisition d'un signal primaire proportionnel à l'épaisseur de la soudure
-) Décomposition du signal primaire en plusieurs signaux secondaires comprenant au moins un signal secondaire basse fréquence qui est utilisé pour mesurer l'épaisseur de la soudure.

## Description

### Domaine de l'invention

L'invention se situe dans le domaine des emballages, et plus particulièrement des emballages flexibles fabriqués par soudage d'une feuille plastique. L'invention peut être utilisée par exemple pour la fabrication de tubes d'emballage destinés au conditionnement de produits liquide ou visqueux. Bien entendu, la présente invention n'est pas limitée à cette application unique de fabrication de tubes d'emballage mais peut s'appliquer à d'autres domaines dans lesquels la fabrication d'un objet découle du soudage de feuilles, par exemple en plastique.

### Etat de la technique

A titre d'exemple, la demande de brevet EP3292942 décrit un procédé et un dispositif pour le contrôle en continu de l'étanchéité d'une soudure à l'extrémité d'un tube contenant un produit. L'invention de EP3292942 est plus particulièrement, mais non exclusivement, destinée au domaine du conditionnement de produits cosmétiques stériles, liquides ou pâteux dans un emballage tubulaire souple, dont une extrémité est aplatie et soudée pour assurer son étanchéité. Un tel emballage permet de dispenser, par une ouverture généralement refermable à l'une de ses extrémités, une quantité précise du produit contenu, fonction de la pression exercée sur le tube.

L'invention de EP3292942 est destinée à une ligne de conditionnement automatique d'un tel produit dans un tel emballage, avec des cadences de production de l'ordre de 200 tubes remplis par minute.

Selon un exemple de mise en oeuvre du procédé connu de EP3292942, une telle ligne de conditionnement en emballage tubulaire comprend un poste de remplissage où le produit est déversé dans l'extrémité ouverte du tube, positionné sous une trémie, par un dispositif de dosage et de remplissage. Selon un exemple de mise en oeuvre, le tube se trouve en position verticale sous la trémie, l'extrémité ouverte étant en haut. La ligne de conditionnement comprend un poste de fermeture dans lequel l'extrémité ouverte du tube est refermée par soudure. Selon un exemple de réalisation, la fermeture de cette extrémité ouverte comprend un pincement de l'extrémité du tube, les lèvres ainsi pincées étant alors soudées entre elles par des moyens appropriés. Le tube est ensuite évacué de la zone de conditionnement.

La figure 1 de EP3292942 relative à l'art antérieur représente l'extrémité soudée (110) d'un tube (100) après une telle opération. Cette extrémité soudée (110) est une zone striée (112) correspondant à la soudure des lèvres de l'extrémité du tube (100). Ladite zone striée (112) s'étend sur toute la largeur du tube sur une hauteur généralement comprise entre 5 mm et 7 mm. Selon un exemple de mise en oeuvre, un surplus de matière à l'extrémité supérieure de la zone striée est coupé, après l'opération de soudure, afin de réduire la hauteur de ladite zone striée et d'améliorer l'esthétique du tube. Selon un exemple de réalisation courant, la soudure de la zone striée est réalisée par des mors striés, de sorte que cette zone est gaufrée sur une bonne part de sa surface, mais comprend fréquemment une zone plane (113) sur laquelle est gravé un code d'identification, ou des mentions légales. Selon d'autres modes de réalisation, des mors non striés sont utilisés et la zone dite striée est lisse.

Afin de réduire les risques de soudure défectueuse, le pincement et la soudure sont réalisés entre 0,5 mm et quelques millimètres au-dessus du niveau (111) de remplissage du tube, évitant ainsi la pollution des faces soudées par le produit conditionné.

Dans le cas où le produit contenu dans le tube est un produit cosmétique stérile, le remplissage est réalisé dans un environnement stérile. Mais même dans ces conditions de remplissage, il est souhaitable que l'extrémité inférieure de la soudure, côté produit, soit la plus proche possible du niveau de produit dans le tube, de sorte que le moins d'air possible soit emprisonné dans le tube, afin d'assurer une bonne conservation du produit. La soudure est ainsi réalisée au ras du niveau de produit contenu, augmentant ainsi les risques de pollution des interfaces soudées par du produit et de soudure défectueuse.

Dans ces circonstances, si la hauteur du pincement est mal positionnée par rapport au niveau de remplissage du tube, la zone de soudure est susceptible d'être polluée par du produit et le tube est susceptible présenter un défaut d'étanchéité. Ce défaut d'étanchéité n'est pas toujours visible sur le produit fini et dans certains cas ne se révèle que lors des premiers pressages sur le tube par l'utilisateur final. De plus, compte tenu des cadences élevées de production, un tel défaut est susceptible de se reproduire sur un grand nombre de tubes. Les causes de défaut d'étanchéité sont multiples et résultent, par exemple, d'un mauvais réglage, d'une usure des mors de soudure, d'une erreur ou d'une dérive des paramètres de soudage ou de pincement, ou même des paramètres de remplissage, sans que cette liste ne soit ni exhaustive ni limitative. Même si un défaut d'étanchéité n'engendre pas de fuites, celui-ci peut conduire à la contamination du produit par des micro-organismes et compromettre sa conservation. L'invention de EP3292942 vise à résoudre les inconvénients de l'art antérieur en détectant, de manière non destructive, tout défaut d'étanchéité de la fermeture d'extrémité d'un tube de conditionnement juste après la réalisation de la soudure, sans ralentir la cadence de production. Le procédé et le dispositif objet de l'invention de EP3292942 permettent ainsi de mettre au rebut tout tube présentant un tel défaut et de prévenir l'opérateur de la ligne de conditionnement de l'apparition d'un tel défaut, de sorte qu'il prenne les mesures appropriées pour y remédier.

Le document JP S63 253205 décrit un procédé de contrôle de l'extrémité soudée d'un tube. Compte tenu de la forme gaufrée de l'extrémité soudée, de la forme des défauts constatés, telle qu'une inclusion de produit dans la soudure, ce procédé de l'art antérieur ne permet pas de détecter de manière fiable les défauts visés par l'invention sur une ligne de conditionnement à haute cadence, et conduit, selon la sensibilité du réglage, soit à laisser passer des tubes comprenant des défauts, soit à des arrêts intempestifs de la ligne de conditionnement. Or l'intervention sur une ligne de conditionnement stérile est problématique et son redémarrage après intervention implique de rétablir la stérilité. À cette fin, l'invention de EP3292942 concerne un procédé pour le contrôle de l'étanchéité d'une l'extrémité soudée d'un emballage tubulaire après son remplissage, notamment par un produit stérile comprenant les étapes consistant à :
-) réaliser une première soudure de l'extrémité du tube après pincement des lèvres de sorte à créer un talon lisse ;
-) mesurer l'épaisseur dudit talon.

Ainsi dans EP3292942, une première soudure est réalisée au plus près du contenu du tube au moment de son pincement avant que la partie supérieure, au-dessus du talon, ne soit elle-même soudée en rapprochant les lèvres du tube selon un motif gaufré. Le talon est lisse, et d'une épaisseur prévisible, sensiblement égale au double de l'épaisseur des parois du tube. Ainsi il est facile de contrôler de manière fiable tout défaut de soudure, que celui-ci soit localisé, par la présence de produit dans le talon, ou étendu.

L'invention de EP3292942 est avantageusement mise en oeuvre selon les modes de réalisation et les variantes exposés dans EP3292942

Par exemple, selon un mode de réalisation de EP3292942, le procédé objet de l'invention comprend notamment une étape consistant à détecter une variation d'épaisseur du talon selon une direction parallèle à longueur de la soudure.

La détection d'une variation d'épaisseur est plus simple et plus fiable de mise en oeuvre qu'une mesure exacte de l'épaisseur, laquelle est susceptible de varier également selon les lots d'emballages tubulaires.

Ainsi, le procédé objet de l'invention de EP3292942 comprend avantageusement les étapes consistant notamment à :
- obtenir une limite de variation acceptable de l'épaisseur de la partie mesurée ;
- si la variation d'épaisseur détectée lors de l'étape (iii) est supérieure à la limite de variation acceptable, rebuter l'emballage tubulaire.

Comme résultat du procédé et dispositif de de EP3292942, les emballages tubulaires défectueux sont systématiquement écartés.

En résumé : EP3292942 décrit un procédé de contrôle en ligne de l'étanchéité de l'extrémité soudée d'un emballage après son remplissage et l'invention de cette antériorité consiste à mesurer l'épaisseur du talon du tube pour garantir l'étanchéité et EP3292942 permet de rejeter les emballages dont l'épaisseur de soudure est en dehors des variations acceptables.

Toutefois, dans EP3292942 le contrôle de l'épaisseur est fait sur une ligne de conditionnement qui avance de façon intermittente. La mesure de l'épaisseur est effectuée pendant la phase d'arrêt et non pas pendant la phase d'indexage. La mesure peut donc être faite "en statique" dans des conditions similaires aux mesures faites en laboratoire. Cette publication n'apporte donc aucune amélioration de ce point de vue.

En conséquence, EP3292942 ne permet pas de mesurer l'épaisseur de la soudure au cours du procédé de fabrication de la soudure dans une machine en fonctionnement qui génère des bruits parasites liés audit fonctionnement.

EP3292942 ne permet pas de mesurer l'épaisseur de la soudure en cours de procédé de fabrication dans le cas où la soudure est en mouvement continu par rapport à l'outil de soudage et de mesure.

Outre les défauts relevés ci-dessus de l'état de la technique, les problèmes à résoudre auxquels l'on est confronté dans un environnement de production industriel sont notamment les suivants, dans le contexte de la présente invention de production d'emballages en continu :
- Effectuer des mesures précises sur une machine de soudage dans un environnement industriel sachant que
   ∘ Le signal à mesurer est noyé dans un bruit parasite lié aux vibrations de la machine et généré par son fonctionnement.
   ∘ La précision souhaitée de la mesure est environ 10 fois plus faible que l'amplitude du bruit parasite lié à l'environnement industriel.

La méthode proposée dans l'invention décrite ci-dessous permet de palier les inconvénients précités et d'effectuer les mesures désirées avec la précision souhaitée, dans un environnement de production en continu.

### Définitions et références numériques

- 1: soudure
- 2: extrémités de la feuille
- 3: couche supérieure
- 4: couche inférieure
- 5: couche fonctionnelle
- 6: épaisseur de la soudure
- 7: matière coulée
- 8: interface soudée
- 9: recouvrement
- 10: palpeur principal
- 11: capteur principal
- 12: bâti de la machine
- 13: vérin
- 14: contrepièce
- 15: dispositif de mesure
- 16: signal du capteur principal
- 17: palpeur secondaire
- 18: ressort
- 19: capteur secondaire
- 20: signal du capteur secondaire
- 21: bande de renfort
- 22: cordon de soudure
- 23: couche extrudée

### Exposé général de l'invention

Un but de l'invention est d'améliorer les procédés et dispositifs de fabrication d'emballages soudés, en particulier de tubes d'emballage destinés au conditionnement de produits liquides ou visqueux.

Un autre but est de proposer des procédés et dispositifs pouvant être utilisés de manière fiable dans un environnement industriel en production, malgré les vibrations et le bruit engendrés dans ce cadre.

Un autre but est de proposer des procédés et dispositifs pouvant être mis en oeuvre de façon simple et efficace.

Un autre but est de proposer des procédés et des systèmes modulaires qui peuvent se mettre en oeuvre sur des machines existantes.

D'autre buts et solutions découlant de la présente invention seront décrit dans le texte ci-dessous et dans les modes d'exécution de la présente invention.

L'invention porte notamment sur un procédé de soudage d'une feuille en continu, à grande cadence de production et comportant une étape de mesure de l'épaisseur de la soudure pendant la production et sans arrêt de la machine. Une analyse du signal obtenu lors de cette mesure permet ensuite de déterminer la qualité de la soudure et de décider si le tube remplit les conditions souhaitées de qualité.

Le procédé selon l'invention est particulièrement destiné, mais pas exclusivement, au domaine des tubes d'emballage flexible. Le segment de marché concerné est le suivant comme exemple non-limitatif : produits liquides et visqueux pour le marché de l'"oral care", de la cosmétique, le domaine pharmaceutique, et le domaine alimentaire.

Le procédé de soudage comprend notamment les étapes suivantes :
- Déroulement d'une feuille imprimée, par exemple à partir d'une bobine
- Découpe à la largeur requise
- Conformation de la feuille découpée en forme tubulaire
- Positionnement des extrémités à souder Chauffage des extrémités positionnées
- Compression des extrémités positionnées
- Refroidissement
- Eventuellement reformage
- Mesure de l'épaisseur
- Découpe à une longueur prédéterminée pour l'obtention de segments tubulaires imprimés

Dans des étapes ultérieures, pour la fabrication de l'emballage (par exemple un tube):
- Les segments tubulaires sont soudés à une épaule de tube (par soudage, ou par surmoulage par compression ou injection)
- Operculage
- Bouchonnage

Le remplissage de l'emballage s'effectue de la façon suivante, également dans des étapes ultérieures :
- Remplissage par l'extrémité restée ouverte
- Soudage du talon pour former l'emballage final avec son produit.

Selon l'un des principes de l'invention, le contrôle de certaines des propriétés de la soudure permet d'assurer la qualité de ladite soudure. Le contrôle étant fait en continu lors de la production, il est possible grâce à l'invention de réagir rapidement dans le processus de fabrication lorsque la soudure ne remplit pas les conditions souhaitées, ou lorsqu'une dérive de certains paramètres est constatée. Il n'est donc pas nécessaire d'attendre la fin d'une production complète et la mesure en laboratoire d'échantillons de tubes produits, comme décrit ci-dessous, le principe de l'invention étant bien plus intéressant économiquement en cas de défaut puisqu'il évite la mise au rebut de l'ensemble de la production en permettant une réaction immédiate dès la détection d'une dérive et/ou d'un défaut.

Actuellement, le contrôle se fait par pointage sur des tubes produits et découpés. Concrètement, des tels tubes sont prélevés dans une production (par exemple dans des lots) et ces tubes sont découpés et/ou mesurés individuellement pour déterminer s'ils remplissent les conditions de qualité requise. Toutefois, ces tests et mesures ne permettent pas un retour et une réaction rapide au niveau de la production de sorte que de nombreux tubes défectueux peuvent être fabriqués avant une réaction sur les machines de production ce qui donne lieu à un nombre importants de déchets et rebuts. L'arrêt de la production d'une machine est également très coûteux et doit être évité dans la mesure du possible.

En conséquence, selon le principe de l'invention, on cherche à effectuer un contrôle de qualité pertinent pendant la production, en continu, qui permette une réaction immédiate en cas de défaut constaté ou de dérive du processus de fabrication au cours du temps. De plus, une mesure permanente en cours de production permet également de détecter des problèmes de machine comme on le comprendra de la description qui suit.

Selon la présente invention, il a été démontré que la stabilité de l'épaisseur de la soudure permet de conclure sur la stabilité et la qualité de la soudure et par conséquent de garantir les propriétés de la soudure.

En conséquence du principe énoncé ci-dessus, il découle qu'une mesure de l'épaisseur de la soudure permet de mesurer la stabilité de la soudure. Ainsi, une épaisseur de soudure constante conduit à un taux de compression de la soudure constant si l'épaisseur de la feuille est constante. La compression de la soudure ayant une influence sur les écoulements de matière fondue, une compression de la soudure constante induit des écoulements de matière identiques et par conséquent une configuration et des propriétés de la soudure inchangées.

Dans un mode d'exécution, on peut accepter de faibles variations d'épaisseur, par exemple entre des valeurs limites acceptables. Ces valeurs limites peuvent être définies au préalable et/ou par l'expérience et/ou par apprentissage et basées, par exemple sur les matières utilisées ou le produit à former.

Dans le cas où une dérive lente de l'épaisseur mesurée de la soudure est observée, cela indique que soit cette dérive est liée à une dérive du procédé (par exemple une montée en température de certains éléments constitutifs du procédé), soit que cette dérive est liée à une variation lente de l'épaisseur moyenne de la feuille soudée. Afin de conserver des propriétés de soudure inchangées, des seuils peuvent être fixés au-delà desquels des interventions sont nécessaires. Ces interventions peuvent consister par exemple à ajuster les réglages de la machine.

La présente invention apporte les avantages suivants :
- une diminution des rebuts puisque la mesure s'effectue en continu lors de la production ;
- une production à grande cadence puisque la mesure et l'analyse se font lors de la production en continu, directement sur l'objet produit (soit la mesure de l'épaisseur), sans nécessité de ralentir la cadence de production ;
- une détection des défauts en temps réel en cours de production ;
- l'emballage défectueux est identifié avant même sa découpe finale et peut être retiré de la production par une processus de tri avant les étapes ultérieures de fabrication et de remplissage. Le coût des rebuts est ainsi diminué ;
- une détection des dérives du procédé et une correction immédiate. La quantité de rebuts est ainsi diminuée ;
- la possibilité de détecter un dysfonctionnement au niveau de la machine lors de l'analyse du signal mesuré, ce qui permet aussi d'intervenir rapidement sur l'outil de production.

La présente invention permet une amélioration de la qualité produite entres autres pour les raisons suivantes :
- L'invention permet un contrôle de 100% des emballages produits avec quantification de la qualité des emballages fabriqués (par exemple en définissant une norme découlant des tolérances et de l'écart des valeurs mesurées) par rapport aux exigences du client final pour les produits fabriqués.
- Les propriétés de la soudure sont garanties grâce à une carte de contrôle de l'épaisseur de la soudure mesurée en continu.
- La mesure conjointe de la rugosité de la soudure permet de détecter des défauts ponctuels (poussières, boulettes de matières plastique, etc...)
- le suivi et traçage des lots de production et des produits.

Comme indiqué ci-dessus, les difficultés à surmonter sont notamment les suivantes :
- La précision nécessaire pour assurer la constance des propriétés de la soudure découle des très faibles variations d'épaisseur de sorte que la précision de la mesure doit être inférieure à 10 microns et de préférence à 5 microns.
- La précision de mesure souhaitée est environ 10 fois inférieure à l'amplitude du bruit parasite
- L'amplitude des variations d'épaisseur que l'on veut mesurer sont noyées dans le bruit parasite

L'invention porte notamment sur un procédé de soudage dans lequel l'épaisseur de la soudure est mesurée de façon continue, en temps réel pendant la production avec une fréquence d'acquisition supérieure à 100Hz et de préférence supérieure à 1000Hz, d'autres valeurs étant possibles dans le cadre de l'invention. Selon l'invention, le signal primaire mesuré est décomposé de préférence en trois signaux secondaires :
∘ Un signal secondaire de basse fréquence
∘ Un signal secondaire de moyenne fréquence
∘ Un signal secondaire de haute fréquence

Le signal secondaire basse fréquence est calculé à partir du signal primaire grâce au spectre des fréquences inférieures à f₁. Selon l'invention, la valeur de f₁ est supérieure à Cₘ/60 qui correspondrait à l'acquisition d'un point de mesure par emballage ; et de préférence supérieure à (Cₘ/60)*(Lₑ/10) qui correspondrait à un point de mesure tous les 10mm ; avec:
- f₁ : fréquence en Hertz
- Cₘ : cadence de la machine en emballage par minute
- Lₑ : longueur de la soudure par emballage en mm

Le signal secondaire moyenne fréquence est calculé à partir du signal primaire grâce au spectre des fréquences supérieures à f₁ et inférieures à une fréquence f₂. Selon l'invention, la fréquence f₂ est inférieure à (Cₘ/60)*(Lₑ/0,01) qui correspondrait à l'acquisition d'un point de mesure tous les 0,01mm; et de préférence inférieure à (Cₘ/60)*(Lₑ/0.03) qui correspondrait à un point de mesure tous les 0.03mm ; avec :
- f₂ : fréquence en Hertz
- Cₘ : cadence de la machine en emballage par minute
- Lₑ : longueur de la soudure par emballage en mm

Le signal secondaire haute fréquence est calculé à partir du signal primaire grâce au spectre des fréquences supérieures à f₂.

La somme des signaux secondaires est égale au signal primaire initial.

Bien entendu, les valeurs indiquées ci-dessus le sont à titre d'exemples illustratifs et d'autres valeurs sont possibles dans le cadre de la présente invention.

Au moyen de ces signaux secondaires, on peut effectuer l'analyse et la mesure suivante:
- Le signal secondaire basse fréquence est utilisé pour mesurer les variations d'épaisseur de la soudure
- Le signal secondaire moyenne fréquence est utilisé pour mesurer la rugosité de la soudure
- Le signal secondaire haute fréquence est utilisé pour détecter des anomalies et/ou usures de l'équipement de soudage et du système d'acquisition du signal d'épaisseur et/ou de la machine de production.

Ces principes, avantages et modes d'exécution de la présente invention sont présentés de façon détaillée dans la description qui suit et dans les figures annexées.

### Brève description des figures

La figure 1 représente un exemple de soudure de tube par recouvrement des extrémités d'une feuille.
Les figures 2 et 3 illustrent des principes de mesure de l'épaisseur de la soudure sur une machine de production, selon un mode d'exécution de la présente invention.
Les figures 4a et 4b décrivent le procédé de soudage en continu d'une feuille comportant une mesure en ligne de l'épaisseur de la soudure. Comme décrit dans la présente demande, le procédé de soudage selon un mode d'exécution comporte notamment une phase de traitement du signal mesuré de l'épaisseur qui permet d'obtenir une précision de mesure environ 10 fois inférieure au bruit parasite lié à l'environnement industriel.
Les figures 5 à 8 représentent d'autres exemples de soudure pouvant être réalisées et mesurées selon l'invention.

### Exposé détaillé de l'invention

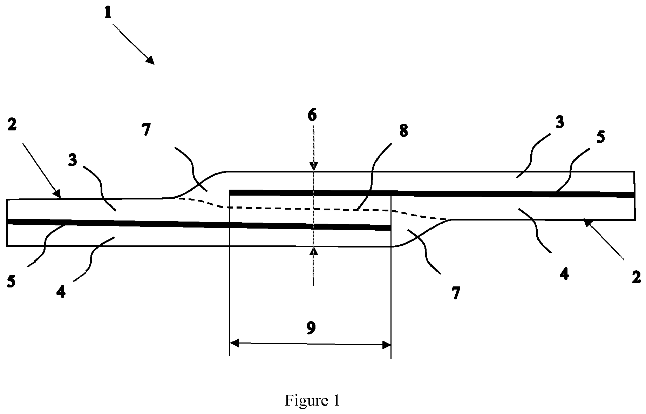

La figure 1 illustre un premier exemple de soudure 1 par recouvrement des extrémités d'une feuille (comme un laminé) pour fabriquer, un emballage par exemple un tube. Une telle configuration de soudure est typiquement un exemple de celle qui est mesurée avec un procédé selon l'invention.

Les extrémités du laminé 2 (qui en général est initialement plan) sont amenées l'une sur l'autre pour former le recouvrement 9. Le laminé est généralement formé d'au moins trois couches, dans cet exemple illustratif, d'une couche supérieure 3, une couche inférieure 4 et une couche fonctionnelle 5 (comme une couche barrière). La mesure référencée "6" définit l'épaisseur de la soudure (qui sera mesurée selon le principe de l'invention), la référence "7" illustre de la matière coulée suite à la soudure et la référence "8" indique l'interface soudée entre les extrémités.

Les propriétés des soudures des emballages ont un impact de premier ordre sur la solidité et l'étanchéité de l'emballage, mais également la protection et conservation des produits emballés. Pour ces raisons, une grande attention est apportée au contrôle de ces soudures dans les usines de production d'emballage. Les points de contrôle portent habituellement sur l'interface soudé 8, ainsi que sur l'encapsulation des extrémités de la couche fonctionnelle 5. Cette encapsulation permet d'éviter le contact de ladite couche 5 avec le produit emballé et permet également de limiter les risques de délamination de la feuille 2 par propagation à l'interface entre la couche 5 et la couche 4 de composants contenus dans l'emballage. Pour assurer l'encapsulation de la couche fonctionnelle 5, l'opération de soudage - consistant à chauffer, comprimer et refroidir les extrémités 2 à assembler - a pour effet de créer un écoulement de matière fondue des couches 3 et 4 du laminé lors de la compression de manière à créer une accumulation de matière coulée 7 qui vient recouvrir l'extrémité de la couche 5. L'opération de soudage étant réalisée par défilement de la feuille 2 à vitesse constante dans les éléments du procédé de soudage, et tous les paramètres étant gardés constants (chauffage, pression, refroidissement), il en résulte une soudure qui en principe varie peu. La constance des propriétés de la soudure 1 dépend entre autres de la stabilité du procédé et des propriétés du laminé.

L'invention consiste notamment à mesurer en continu un seul paramètre de la soudure (à savoir l'épaisseur 6) pour garantir l'ensemble des propriétés de la soudure. Selon cette idée, une stabilité de l'épaisseur soudée garantit la stabilité des propriétés de la soudure ; et inversement les variations des caractéristiques de la soudure ont un impact sur l'épaisseur de la soudure. Ce principe ne peut s'appliquer que si l'épaisseur de la soudure est mesurée continuellement. Si par exemple l'épaisseur de la soudure mesurée augmente, cela signifie que la soudure est moins comprimée et par conséquent, la quantité de matière coulée 7 est diminuée. Les raisons d'une augmentation de l'épaisseur de la soudure peuvent être multiples comme par exemple une augmentation du recouvrement 9, ou bien une augmentation de l'épaisseur du laminé ou encore une diminution de l'énergie apportée au laminé pour le faire fondre, ou encore une diminution de la pression de compression. Ainsi, avec la mesure d'un seul paramètre (comme l'épaisseur 6 de la soudure) c'est à la fois la constance des propriétés de la soudure qui est mesurée ainsi que la stabilité de l'ensemble du procédé de soudage. Un raisonnement similaire peut être fait pour une diminution de l'épaisseur 6 de la soudure pouvant conduire également à des propriétés de la soudure amoindries comme par exemple une quantité de matière coulée 7 trop abondante conduisant à des défauts de l'esthétique du produit final.

L'invention consiste donc notamment, mais non exclusivement, à régler initialement le procédé pour réaliser une soudure répondant à l'ensemble des critères de qualité, puis à mesurer les variations de l'épaisseur de la soudure pendant la production. L'amplitude des variations d'épaisseur 6 mesurée est utilisée pour évaluer et juger en temps réel et en continu de la qualité des soudures.

La mesure de l'épaisseur de la soudure 1 nécessite une grande précision afin d'être en mesure de contrôler indirectement en temps réel la stabilité des propriétés de ladite soudure. Les méthodes de contrôle actuelles par prélèvement statistique d'échantillons sur la ligne de production et par mesures desdits échantillons avec des appareils de laboratoire permettent d'obtenir des mesures précises et reproductibles. L'expérience montre que la stabilité des propriétés de la soudure est assurée quand le taux de compression de la soudure est compris dans un intervalle de plus ou moins 2,5%. Par exemple, pour une épaisseur de laminé de 250 microns, une variation du taux de compression de 5% correspond à une variation d'épaisseur de la soudure 6 de 25 microns. Une précision de mesure inférieure à 5 microns est nécessaire pour détecter des variations de compression de l'ordre de 1% et contrôler la compression de la soudure dans un intervalle de 5%. Grâce à l'invention, il est possible d'obtenir cette précision de mesure en ligne dans l'environnement industriel d'une machine de production produisant à grande cadence de production et générant des informations parasites nuisant à la précision de la mesure effectuée.

De façon générale et systématique dans les figures, le sens de production et de déplacement de la feuille illustrée est perpendiculaire au plan du dessin illustré.

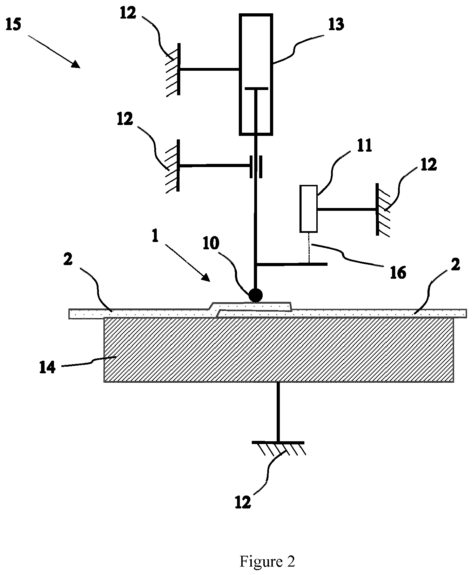

La figure 2 illustre un mode d'exécution d'un dispositif, par exemple un module, permettant la mise en oeuvre du procédé selon la présente invention et la mesure de l'épaisseur de la soudure.

Le laminé est par exemple celui illustré en figure 1 et les extrémités 2 se recouvrent dans la zone de soudure 1. Le dispositif comprend un palpeur principal 10, par exemple une roulette, qui se déplace sur la soudure 1 lors du déplacement de la feuille pour mesurer l'épaisseur de ladite soudure. A cet effet, le module comprend en outre un capteur principal 11, par exemple un capteur inductif (ou autre équivalent), qui mesure le déplacement vertical de la roulette 10 par le signal 16. Le capteur inductif permet des mesures de grande précision, de l'ordre de 0,1 microns. Cependant comme il le sera exposé ultérieurement, le signal mesuré par le capteur 11 est noyé dans un bruit dont l'amplitude est de l'ordre de 10 microns à 20 microns, soit 100 fois la précision intrinsèque du capteur de mesure et 5 à 10 fois la précision nécessaire. D'autres types de capteurs, comme par exemple des capteurs optiques ou utilisant une autre technologie appropriée, peuvent être utilisés. La roulette 10 est montée sur un vérin 13 lui-même monté sur le bâti de la machine 12. En dessous de la feuille se trouve une contrepièce 14 qui forme une référence de base pour la mesure. Le vérin 13 permet de remonter le palpeur principal 10 lors d'un arrêt de la machine pour des changements de configuration. Une partie des bruits parasites sont liées aux vibrations de la machine de production et en particulier de la contrepièce 14. Dans le cas de la confection de corps tubulaires, ladite contrepièce 14 se présente sous la forme d'une tige de soudage autour de laquelle le laminé est enroulé. Ladite tige de soudage est fixée au bâti 12 à l'une de ses extrémités et a une longueur pouvant atteindre plusieurs mètres. Cette tige de soudage repose également sur des courroies d'entrainement du laminé à l'endroit ou à proximité du dispositif de mesure 15. Tous ces éléments ont pour effet de créer des vibrations importantes de la contrepièce 14 qui génère un bruit important au niveau du capteur de mesure 15. Ces perturbations ont pour effet de générer un bruit parasite dont l'amplitude est environ 10 fois supérieure à la précision souhaitée de la mesure. L'invention permet d'utiliser l'ensemble des informations contenues dans le signal pour :
- mesurer avec précision l'épaisseur de la soudure 6,
- détecter la formations de poussières au niveau de la soudure ou des variations locales d'épaisseur,
- contrôler la qualité de la chaine d'acquisition du capteur de mesure
- et finalement établir un diagnostic de l'usure et la qualité de certaines pièces de l'équipement.

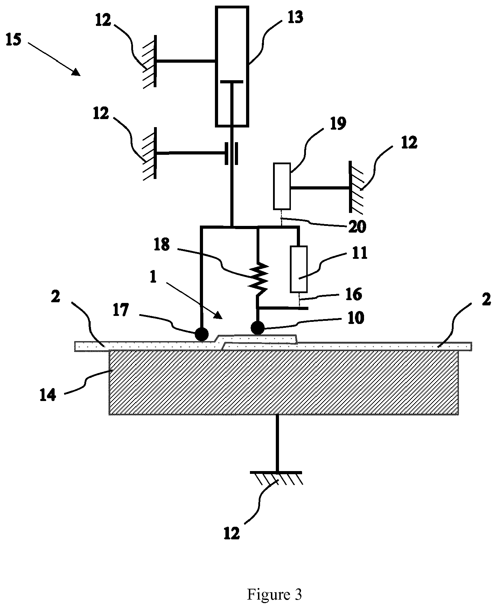

La figure 3 illustre un autre mode d'exécution d'un dispositif de mesure de l'épaisseur de la soudure 6. Dans ce mode, le système est capable de faire une mesure relative de l'épaisseur par rapport à la couche de laminé non-soudé.

A cet effet, le dispositif ou module de mesure comprend d'une part des moyens de mesure similaires à ceux de la figure 2, soit un capteur 10 (par exemple une roulette), un capteur principal 11 (par exemple optique) émettant un signal 16 et un ressort 18 maintenant le capteur 10 sur la soudure. Au lieu d'être monté sur le bâti de la machine 12, ce système de mesure est monté sur un dispositif de mesure secondaire qui comprend un palpeur secondaire 17 (comme une roulette) appliqué sur l'extrémité du laminé (par exemple sur l'extrémité 2), un capteur secondaire 19 (par exemple un capteur optique) émettant un signal de mesure secondaire 20. Le système secondaire est lié au bâti par le vérin 13 et le capteur secondaire 19 est aussi monté sur le bâti. 14 reste la contrepièce de référence. Ce dispositif de mesure comportant 2 capteurs 11 et 19, permet de mesurer l'épaisseur du laminé 2 ainsi que l'épaisseur 6 de la soudure. Ce dispositif est particulièrement intéressant lorsque l'épaisseur du laminé varie de façon importante. La mesure de l'épaisseur du laminé permet notamment de calculer le taux de compression de la soudure que l'on cherchera à garder constant même si l'épaisseur du laminé varie.

Ce mode d'exécution permet une mesure relative de l'épaisseur de la soudure par rapport au laminé non-soudé en utilisant le signal issu de chaque palpeur. Dans le cas où l'épaisseur du laminé 2 varie très faiblement et peut être considérée constante, le dispositif de mesure peut être utilisé sans le capteur 19. Ce dispositif simplifié pour la mesure de l'épaisseur de la soudure permet d'écarter de la mesure les bruits parasites liés aux vibrations de la contrepièce 14. Le dispositif simplifié ne permet pas en contrepartie d'effectuer un diagnostic sur la contrepièce 14 et les parties de l'équipement qui créent des vibrations de ladite contrepièce.

Bien entendu, les capteurs (palpeurs, capteurs optiques) décrits dans les modes d'exécution de l'invention peuvent utiliser une technologie appropriée autre que celle mentionnée pour la mesure dont ils sont chargés.

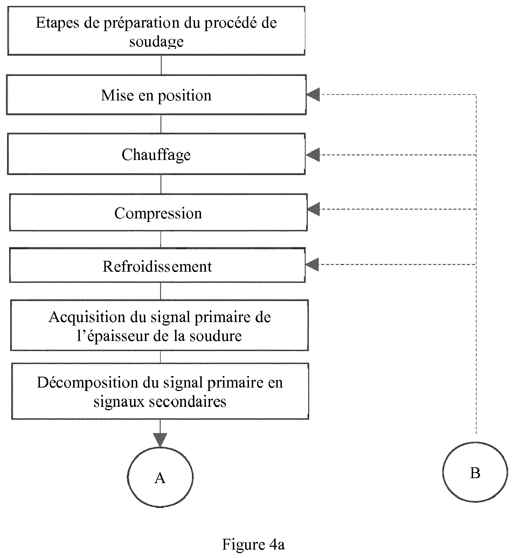

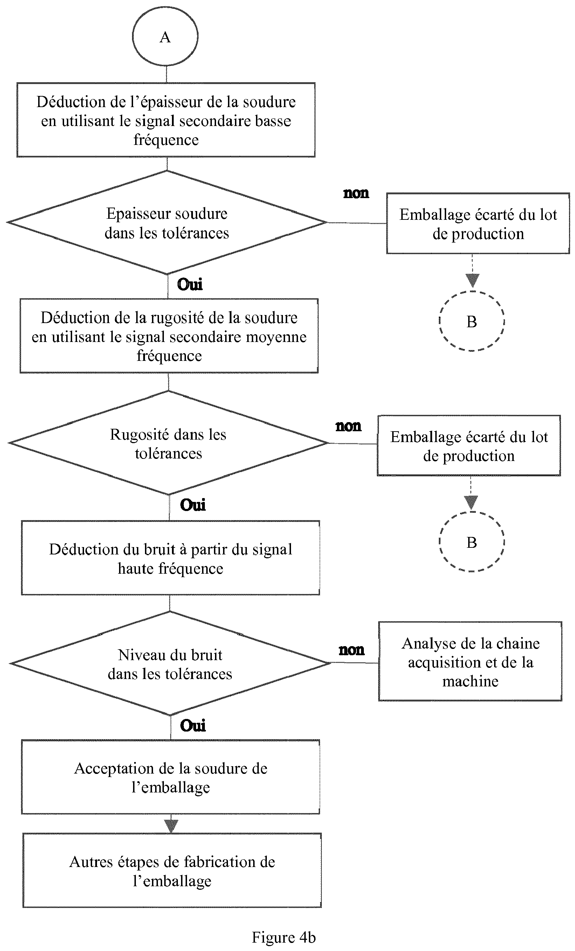

Les figures 4a et 4b illustrent sous forme de schéma-bloc un mode d'exécution du procédé selon l'invention.

Dans une première étape, on prépare le procédé de soudage. Dans l'étape de préparation, il est courant par exemple d'avoir les opérations successives suivantes (de façon non-limitative) :
- le déroulement du laminé qui est conditionné en rouleaux ;
- l'ajustement de la largeur du laminé en fonction du diamètre du tube à produire et en fonction de la largeur du recouvrement 9 ;
- l'alignement du laminé avec le procédé de soudage.

D'autres opérations nécessaires pour la production du produit désiré peuvent avoir lieu dans la première étape comme par exemple des opérations d'impression, des opérations de traitement thermique ou encore des opérations de texturation.

Ensuite, on met en position le laminé pour la soudure, à savoir :
- on met en position de la feuille par rapport au dispositif de soudage ;
- on met en contact des extrémités de la feuille ;

L'opération de mise en position du laminé consiste par exemple à enrouler le laminé autour d'une tige de soudage pour former un corps cylindrique.

On forme ensuite une zone soudée par chauffage, compression et refroidissement des extrémités du laminé ;

Les extrémités du laminé sont ensuite chauffées, comprimées et refroidies.

L'opération de chauffage consiste notamment à faire fondre au moins l'interface à souder. Il existe de nombreuses méthodes de chauffage pouvant être utilisées comme par exemple des méthodes de chauffage utilisant les principes de conduction, de convection ou de rayonnement. De nombreuses technologies de chauffage directe ou indirecte peuvent être utilisées comme par exemple, par air chaud, par patin thermique, par induction électromagnétique, par rayonnement.

L'opération de compression de la soudure peut être réalisée conjointement ou ultérieurement à l'opération de chauffage. L'opération de compression est dans la plupart des cas nécessaire pour garantir une soudure de qualité. Une pression insuffisante peut entrainer des inclusions d'air à l'interface soudé ainsi qu'un enchevêtrement moléculaire insuffisant conduisant à la diminution de la résistance de la soudure. Comme l'illustre la figure 1, l'opération de compression de la soudure, permet également d'encapsuler les extrémités de la couche barrière du laminé.

Ensuite la soudure est refroidie. L'opération de refroidissement de la soudure vient consécutivement aux opérations de chauffage et refroidissement. Dans certains cas l'opération de refroidissement se fait également conjointement aux opérations de chauffage et de compression. Par exemple, afin de protéger la face imprimée du laminé pendant l'opération de soudage, il peut être avantageux de conserver la face imprimée du laminé en contact avec un outil froid pendant le chauffage de l'interface et la compression de la soudure.

L'opération consécutive au refroidissement et illustrée en figure 4a consiste à acquérir le signal correspondant à l'épaisseur de la soudure. Ce signal est appelé signal primaire car il est en l'état inutilisable à cause des bruits parasites dont l'amplitude est environ 10 fois plus élevée que la précision souhaitée de la mesure. Ce signal est mesuré avec un dispositif comme par exemples ceux illustrés en figure 2 ou figure 3 et décrits ci-dessus.

Périodiquement, le signal primaire est décomposé en signaux secondaires. De préférence cette période correspond à une période caractéristique du procédé et du dispositif de production. Avantageusement, cette période est liée à la cadence de production de la machine et préférentiellement cette période est liée à la cadence de production des emballages. Ainsi, l'acquisition du signal est faite sans interruption grâce au dispositif de mesure décrit figure 2 ou figure 3 ; par contre l'analyse du signal est faite de préférence par paquets de points mesurés pendant un intervalle de temps correspondant au temps de production d'un ou plusieurs emballages. Bien entendu, d'autres façons de faire l'acquisition et l'analyse sont possibles dans le cadre de la présente invention.

Dans la suite de l'exposé, nous décrivons le processus de traitement de cet ensemble de points que nous appelons signal primaire. Avantageusement cette opération de traitement étant réalisée à la cadence de production des emballages, cela permet d'agir pendant la production pour écarter de la production les éventuels emballages défectueux.

Le signal primaire est au moins décomposé en un signal secondaire, c'est-à-dire un signal secondaire basse fréquence. Dans un mode d'exécution, le signal primaire est décomposé en deux signaux secondaire: c'est-à-dire un signal secondaire basse fréquence et un signal secondaire haute fréquence. Dans un autre mode d'exécution, le signal primaire est décomposé en 3 signaux secondaires, soit un signal secondaire basse fréquence, un signal secondaire moyenne fréquence et un signal secondaire haute fréquence.

Les méthodes de décomposition du signal par analyse fréquentielle sont connues et largement utilisées dans le traitement du signal. Ces méthodes sont basées sur des outils mathématiques connus comme par exemple la transformée de Fourier, et utilisent les algorithmes qui en découlent. La méthode consiste donc à transformer le signal primaire temporel en un signal fréquentiel. Le spectre de fréquence du signal primaire est ensuite décomposé en plusieurs parties, au moins en deux parties, et de préférence en trois parties formant respectivement un spectre basse fréquence, moyenne fréquence et haute fréquence. Le spectre basse fréquence est utilisé pour reformer un signal temporel appelé signal secondaire basse fréquence. De même, le spectre moyenne fréquence est utilisé pour composer le signal temporel secondaire moyenne fréquence, et le spectre haute fréquence permet d'obtenir le signal temporel secondaire haute fréquence.

Sur la figure 4b, il est présenté la suite des opérations effectuées suite à la décomposition du signal primaire en signaux secondaires.

A partir du signal secondaire basse fréquence, on en déduit la mesure de l'épaisseur de la soudure avec une grande précision. De préférence le signal basse fréquence est obtenu à partir du spectre des fréquences du signal primaire qui sont inférieures f₁. Selon l'invention, la valeur de f1 est supérieure à Cₘ/60 qui correspondrait à l'acquisition d'un point de mesure par emballage ; et de préférence supérieure à (Cₘ/60)*(Lₑ/10) qui correspondrait à un point de mesure tous les 10mm ; avec :
- f₁ : fréquence en Hertz
- Cₘ : cadence de la machine en emballage par minute
- Lₑ : longueur de soudure par emballage en mm

Le signal secondaire basse fréquence permet de mesurer l'épaisseur de la soudure avec une précision inférieure à 10 microns et de préférence inférieure à 5 microns.

Le signal secondaire moyenne fréquence est calculé à partir du signal primaire grâce au spectre des fréquences supérieures à f₁ et inférieures à une fréquence f₂. Selon l'invention, la fréquence f2 est inférieure à (Cₘ/60)*(Lₑ/0,01) qui correspondrait à l'acquisition d'un point de mesure tous les 0,01mm ; et de préférence inférieure à (Cₘ/60)*(Lₑ/0.03) qui correspondrait à un point de mesure tous les 0.03mm ; avec : f₂ : fréquence en Hertz
- Cₘ : cadence de la machine en emballage par minute
- Lₑ : longueur de la soudure par emballage en mm

Le signal secondaire moyenne fréquence permet de mesurer la rugosité de la soudure et en particulier de détecter des défauts ponctuels pouvant apparaitre dans la zone soudée comme de fines particules provenant de l'emballage ou l'équipement de production. Ces fines particules créent des variations locales de l'épaisseur peuvent provenir de l'abrasion entre le laminé et le dispositif de soudage.

Le signal secondaire haute fréquence est calculé à partir du signal primaire grâce au spectre des fréquences supérieures à f₂. L'analyse du signal haute fréquence est utilisée pour établir un diagnostic du bon fonctionnement du dispositif de mesure de l'épaisseur ainsi que de l'équipement de production. Une augmentation de l'amplitude du signal secondaire haute fréquence peut indiquer par exemple, la perturbation électromagnétique du signal primaire mesuré par le capteur ou bien à une usure de l'équipement de production.

Finalement, le signal secondaire basse fréquence est utilisé pour déterminer la valeur de mesure de l'épaisseur de la soudure. Selon un mode d'exécution de l'invention, la précision est inférieure à 10 microns et de préférence inférieure à 5 microns.

Dans un mode d'exécution, on détermine donc aussi le signal secondaire de moyenne fréquence. Ce signal permet de détecter et caractériser des défauts ponctuels sur la soudure tels que des poussières ou agrégats de matière plastique qui modifient l'état de surface et donc sont détectés lors de la mesure.

La figure 4b illustre sous forme de schéma-bloc les étapes du procédé lors de l'analyse de la mesure.

Premièrement, lors que la mesure est faite et que le signal est acquis, on détermine la valeur de l'épaisseur tirée du signal basse fréquence. Si cette valeur n'est pas dans les tolérances prédéterminées, l'emballage concerné sera rejeté et écarté du lot de production une fois découpé. Les tolérances du signal basse fréquence sont souvent calculées à partir du taux de taux de compression de la soudure. Par exemple, considérons un laminé d'épaisseur 250 microns et une épaisseur visée de la soudure de 420 microns correspondant à un taux de compression de 16%. Considérons également que l'amplitude de variation du taux de compression acceptable est de 6%. La tolérance inférieure du signal secondaire basse fréquence est donc égale à 405 microns (correspondant à un taux de compression de 19%) et la tolérance supérieure est égale à 435 microns (correspondant à un taux de compression de 13%). De façon générale, on définit les tolérances du signal secondaire basse fréquence afin que les variations du taux de compression de la soudure soient inférieures à 10% et de préférence inférieures à 5%. Ces valeurs dépendent de la nature et de la composition des laminés. Certains laminés sont difficilement comprimables du fait du comportement rhéologique des matériaux qui les composent et du dispositif de soudage, c'est pourquoi le choix des tolérances doit être ajustée au cas par cas en fonction du laminé et du procédé de soudage utilisé. Si cette valeur est dans des tolérances prédéterminées, on peut ensuite procéder à une deuxième étape qui est optionnelle de mesure de la rugosité de la soudure. A cet effet, on détermine la valeur de la rugosité à partir du signal secondaire de moyenne fréquence. Si la valeur de la rugosité n'est pas dans les tolérances requises, l'emballage concerné sera rejeté et écarté du lot de production une fois découpé. Bien entendu, si l'emballage a déjà été considéré comme non-conforme lors de la première étape (contrôle de l'épaisseur de la soudure), il n'est pas nécessaire de procéder à cette deuxième mesure de rugosité. C'est une perte de temps et de ressources puisque l'emballage sera de toute façon rejeté.

La tolérance du signal secondaire moyenne fréquence est de préférence inférieure à +/-5 microns et avantageusement inférieure à +/-3 microns. Le réglage des seuils à +/-3 microns permet d'écarter en temps réel du lot de production tous les emballages dans lesquels des poussières ou défauts de rugosité de tailles supérieures à 3 microns. Si la valeur de rugosité est dans les tolérances, on peut encore déduire et analyser le bruit dans le signal secondaire à haute fréquence, ce bruit étant lié au fonctionnement de la machine de production. Si ce bruit n'est pas dans les tolérances requises et/ou prédéterminées, cela veut dire que la machine ne fonctionne pas de façon correcte et elle doit être réparée/ajustée.

Le réglage de la tolérance du signal secondaire haute fréquence dépend du dispositif de soudage, de sa cadence de production, de son état global. Le signal secondaire haute fréquence donne une indication également de la qualité de la chaine d'acquisition du signal primaire de mesure de l'épaisseur de la soudure. Selon l'invention, le signal secondaire haute fréquence est un outil de diagnostic tant sur l'équipement de production que sur la chaine d'acquisition. Pour un équipement récent en production produisant à une cadence de 100 emballages par minute, correspondant à une vitesse de soudage linéaire de l'ordre de 20m/min les tolérance sont choisies inférieures à +/-80 microns et de préférence inférieures à +/-40 microns.

Si le bruit est dans les tolérances (par exemples des valeurs prédéterminées), la soudure de l'emballage est acceptée et on peut passer aux autres étapes de fabrication de l'emballage.

Dans une variante, on peut ne prendre en compte lors de l'analyse que le paramètre de l'épaisseur de la soudure, et non pas la rugosité ni le bruit de la machine et ne décider sur la conformité de l'emballage que sur cet unique critère.

Dans une autre variante, on peut ne prendre en compte que deux critères sur les trois (épaisseur et rugosité ou bruit machine).

Ce choix du nombre de critères peut être déterminé par le type de produit fabriqué et la gamme dudit produit (produit de luxe ou bas de gamme).

Bien que le schéma de la figure 4b illustre les étapes de façon successives, il est clair que l'analyse des signaux secondaires et les calculs peuvent être faits en parallèle pour optimiser le temps de traitement de l'information.

Dans ces figures, les références "A" et "B" encerclées sont illustrées pour faire le lien entre les figures 4a et 4b. Par exemple, après la dernière opération ou étape de la figure 4a, c'est-à-dire la "Décomposition du signal primaire en signaux secondaires", on passe dans le procédé à la première opération ou étape de la figure 4b, c'est-à-dire la "Déduction de l'épaisseur de la soudure en utilisant le signal secondaire basse fréquence".

De même, dans la figure 4b, si on se trouve dans l'opération "Emballage écarté du lot de production" (voir sur le côté droite de la figure 4b), la référence encerclée "B" indique que l'on remonte à la figure 4a sur la même référence encerclée "B" et que l'on va agir sur les paramètres de réglage de la machine et de préparation, notamment sur la mise en position et/ou le chauffage et/ou la compression et/ou le refroidissement. Ces étapes ont été décrites ci-dessus en détail.

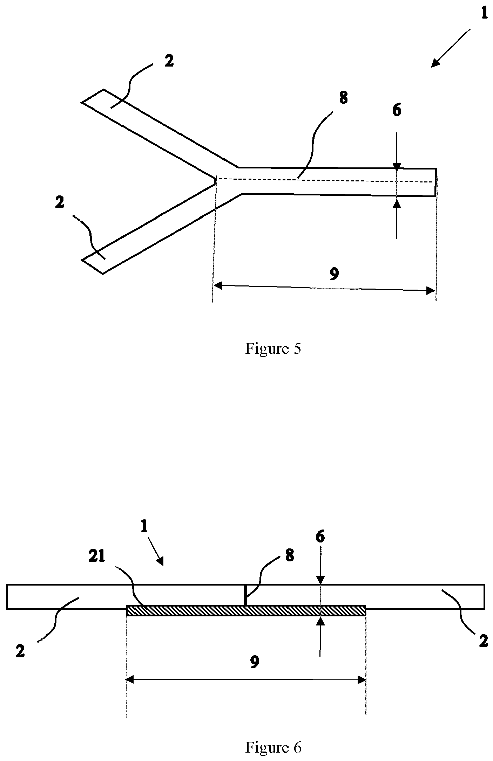

Les figures 5 à 8 représentent d'autres exemples de soudures pouvant être réalisées et mesurées avec les principes de l'invention.

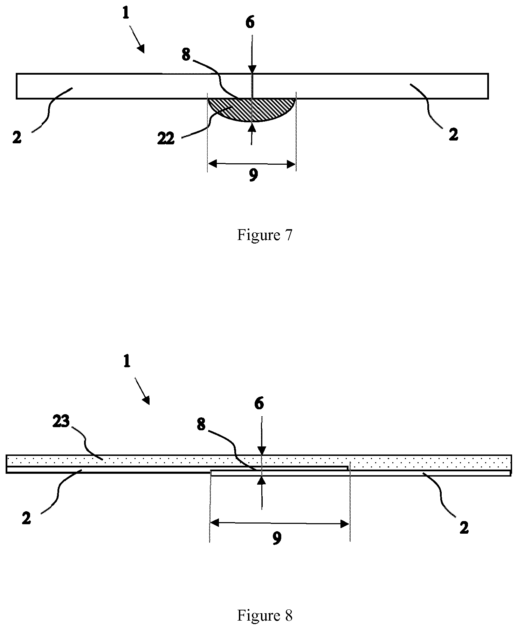

La figure 5 illustre une soudure par recouvrement de deux extrémités 2, la figure 6 une soudure bout à bout avec une bande de renfort 21 couvrant l'interface de soudure 8, la figure 7 une autre soudure bout à bout avec un cordon de soudure 22 et la figure 8 une soudure par recouvrement avec une couche extrudée 23. Les principes de l'invention peuvent s'appliquer à toutes ces configurations d'assemblage, et d'autres encore, pour la mesure de l'épaisseur de la soudure 6 selon ce qui est exposé ci-dessus.

Les modes d'exécution décrits dans la présente demande le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens et/ou étapes de procédé utilisés dans un mode peuvent être utilisés dans un autre mode. Ainsi, par exemple, les valeurs numériques sont données à titre d'indications illustratives et d'autres valeurs sont possibles en fonction des modes d'exécution et des produits fabriqués (produits en tant que tels, gammes de produits etc.).

## Revendications

1. Procédé de soudage en continu d'une feuille en matière plastique pour la confection d'emballages flexibles, comme des tubes, comprenant au moins les étapes suivantes :
- Mise en position de la feuille par rapport au dispositif de soudage
- Mise en contact des extrémités de la feuille
- Formation d'une zone soudée par chauffage, mise en pression et refroidissement desdites extrémités
- Acquisition d'un signal primaire proportionnel à l'épaisseur de la soudure
- Décomposition du signal primaire en plusieurs signaux secondaires comprenant au moins un signal secondaire basse fréquence,
- le signal secondaire basse fréquence étant utilisé pour mesurer l'épaisseur de la soudure avec une précision inférieure à 10 microns et de préférence inférieure à 5 microns, de telle sorte que la précision de mesure est environ 10 fois inférieure à l'amplitude du bruit parasite.

2. Procédé selon la revendication 1, dans lequel le signal primaire est décomposé en un signal secondaire moyenne fréquence qui est utilisé pour détecter des variations rapides de l'épaisseur et/ou des défauts ponctuels sur la soudure tels que des poussières ou agrégats de matière plastique qui modifient l'état de surface.

3. Procédé selon la revendication 1 ou 2, dans lequel le signal primaire est décomposé en un signal secondaire haute fréquence qui est utilisé pour caractériser l'équipement de soudage dans son environnement.

4. Procédé selon l'une de revendications précédentes, dans lequel la fréquence d'acquisition du signal primaire est supérieure à 100Hz

5. Procédé selon l'une de revendications précédentes, dans lequel la fréquence d'acquisition du signal primaire est supérieure à 1000Hz.

6. Procédé selon l'une des revendications précédentes, dans lequel le signal secondaire basse fréquence est obtenu à partir du spectre des fréquences du signal primaire qui sont inférieures f₁, f₁ étant supérieure à Cₘ/60 où
- f₁: est la fréquence en Hertz
- Cₘ: est la cadence machine en emballage par minute.

7. Procédé selon l'une des revendications précédentes, dans lequel f₁ est supérieure à (Cₘ/60)x(Lₑ/10) et où
- f₁: est la fréquence en Hertz
- Cₘ: est la cadence machine en emballage par minute
- Lₑ: est la longueur de soudure d'un emballage en mm.

8. Procédé selon l'une de revendications précédentes, dans lequel le signal secondaire moyenne fréquence est dans une plage de fréquences comprise entre le signal secondaire basse fréquence (f₁) et une fréquence f₂, f₂ étant inférieure à (Cₘ/60)*(Lₑ/0,01) où
- f₂: est la fréquence en Hertz
- Cₘ: est la cadence machine en emballage par minute
- Lₑ: est la longueur de soudure d'un emballage en mm.

9. Procédé selon l'une des revendications précédentes, dans lequel f₂ est inférieure à (Cₘ/60)*(Lₑ/0.03) où
- f₂: est la fréquence en Hertz
- Cₘ: est la cadence machine en emballage par minute
- Lₑ: est la longueur de soudure d'un emballage en mm.

10. Procédé selon l'une de revendications précédentes, dans lequel le signal secondaire haute fréquence est dans une plage de fréquences supérieure à celle de la plage du signal secondaire de moyenne fréquence.

11. Procédé selon l'une des revendications précédentes, comprenant une étape d'étalonnage pour calibrer l'épaisseur mesurée de la soudure.

12. Procédé selon la revendication précédente, dans lequel le signal secondaire basse fréquence est utilisé pour calibrer l'épaisseur mesurée de la soudure.

13. Dispositif pour la mise en oeuvre d'un procédé selon l'une des revendications précédentes 1 à 12, ledit dispositif comprenant des moyens de mise en forme et de soudage-compression-refroidissement d'une feuille flexible pour la confection d'emballages flexibles, comme un tube, le disposition comprenant en outre des moyens pour mesurer l'épaisseur de la soudure et acquérir un signal primaire proportionnel à ladite épaisseur, des moyens pour décomposer le signal primaire en signaux secondaires et déterminer l'épaisseur de la soudure en utilisant l'un des signaux secondaires.

14. Dispositif selon la revendication précédente 13, dans lequel les moyens de mesure de l'épaisseur de la soudure comprennent au moins un palpeur (10) se déplaçant sur la soudure produite.

15. Dispositif selon la revendication 14, dans lequel il comprend un palpeur secondaire (17) se déplaçant sur la feuille en dehors de la zone soudée.
